## Europäisches Patentamt

## European Patent Office

## Office européen des brevets

(11) Publication number: **0 136 761**
**B1**

# EUROPEAN PATENT SPECIFICATION

(45) Date of publication of patent specification: **18.01.89**

(51) Int. Cl.⁴: **G 02 B 6/38**

(21) Application number: **84201400.3**

(22) Date of filing: **02.10.84**

(54) **Method and device for coupling an optical signal from a first light guide into a second light guide.**

(30) Priority: **06.10.83 NL 8303432**

(43) Date of publication of application:
**10.04.85 Bulletin 85/15**

(45) Publication of the grant of the patent:
**18.01.89 Bulletin 89/03**

(84) Designated Contracting States:
**AT BE CH DE FR GB IT LI LU SE**

(56) References cited:
**GB-A-2 100 463**
**US-A-4 342 907**

**PATENTS ABSTRACTS OF JAPAN, vol. 1, no. 47, 9th May 1977, page 2970E76; & JP - A - 51 143 341 (SUMITOMO DENKI KOGYO K.K.) 12-09-1976**

(73) Proprietor: **Staat der Nederlanden (Staatsbedrijf der Posterijen, Telegrafie en Telefonie)**
**P.O. Box 430**
**NL-2260 AK Leidschendam (NL)**

(72) Inventor: **de Block, Cornelis Maria**
**53 Schenkelweg**
**NL-2381 AK Zoeterwoude (NL)**
Inventor: **Matthijsse, Pieter**
**51 Boterdorpsewg**
**NL-2661 AB Bergschenhoek (NL)**

Courier Press, Leamington Spa, England.

## Description

### A. Background of the invention

#### 1. Field of the invention

The invention relates to a method and device for aligning mutually opposed ends of a first and a second optical fibre comprising injecting an optical signal through the coating into the cladding and the core of the first optical fibre, the optical signal propagating in the second optical fibre being detected through its coating, and the ends of the optical fibres being aligned in such a way that the largest possible part of the optical signal from the end of the first optical fibre will be coupled into the end of the second optical fibre. Such alignment is needed before joining the ends of the optical fibres together by means of splicing or glueing.

In general a fibre can be described as consisting of a core made of a high quality material, such as doped quartz, which core is surrounded by a cladding made of a material, such as quartz with preferably a lower refractive index. In its turn the cladding is surrounded by a coating, often made of a synthetic material the refractive index of which is either higher than, or lower than or equal to that of the coating.

In general the fibres now used for transmission purposes can be divided into two groups:
a. multimode fibres,
b. monomode fibres.

Multimode fibres have a core with a diameter of the order of 50 μm and a cladding diameter of the order of 125 μm. Because of the fact that the ratio between the diameter of the cladding and the diameter of the core is low, the core is located in an almost concentric position within the cladding, so that the two ends can be aligned without difficulty. Monomode fibres now used have a core with a diameter of the order of 8 μm and a cladding diameter of about 125 μm. As the diameter of the core is small with regard to the diameter of the cladding, the core is often not located in a truly concentric position within the cladding. This causes difficulties when aligning the fibres, because the amount of light in the core of a monomode fibre is smaller than that in a multimode fibre, at least when making use of the same source of light.

In order to get the smallest possible attenuation at a splice of two monomode fibre ends, it is essential to align the cores of the fibres very precisely. This alignment is preferably done by injecting an optical signal into the core of one fibre, and by coupling the light emerging from the end of the fibre into the end of the other fibre in such a way that the transmission of the optical signal is a maximum. To attain this it is necessary that the optical signal propagates entirely within the core.

#### 2. State of the art

A method for aligning two monomode fibres is known from EP 30108. An optical signal is coupled into a first end of the first fibre, after which a second end of the first fibre will be positioned with regard to a first end of the second fibre in such a way that maximum signal transmission takes place. The detection of the signal in the second fibre is achieved by detecting the light propagating in the cladding.

The method according to the proposal is less attractive because of the fact that the coupling of the signal into the first fibre has to take place at a great distance from the end to be spliced. The method of coupling out as proposed suffices only with fibres with a coating the refractive coefficient of which is lower than that of the cladding.

A method and device known from EP 63954 allows the injection of an optical signal at a short distance from the coupling point. In this case, however, no measures have been taken to ensure that the signal in the core will be as large as possible and that the signal in the cladding will be as small as possible. In consequence this method is suited for cladding alignment as is possible with multimode fibres, but it is not suited for the alignment of the cores, as is necessary with monomode fibres.

### B. Summary of the invention

An object of the invention is to provide a method and a device which do not have the above-mentioned drawbacks, but which make it possible to align the ends of the cores of two monomode fibres precisely. For this purpose the method according to the invention is characterized by the following steps:

(a) injecting the optical signal into a straight part of the first optical fibre and causing it substantially to propagate only along the cladding by injecting the light at an angle of at least 10° and at most 20° with regard to the longitudinal axis of the straight part, the injection being performed via a guiding medium the refractive index of which is equal to or lower than that of the coating, and by

(b) employing a reflective surface mounted on the coating on a side of the fibre opposite to the injection area, said reflective surface extending parallel to the axis of the said straight part;

(c) converting the cladding modes into core modes so that the injected light is then caused substantially exclusively to propagate only through the core of the end part of the first fibre, the conversion including forming a part of the first optical fibre into a bend of at least 45° and at most 180° with a radius of curvature of at least 3 mm and at most 10 mm the bent part following the straight part by a distance of at most 10 mm from the injection area;

(d) aligning the cores of the first and the second optical fibres by coupling light between the opposed ends, and by

(e) detecting the optical signal coupled out of the core of the second optical fibre via a guiding medium the refractive index of which is higher than that of the coating.

According to a further characteristic there will be provided for cylindrical layers around the optical fibre ends, of a medium with a refractive index which is higher than that of the cladding to further attenuate any remaining cladding modes. These cylindrical layers will be fixed just before and just after the coupling point around the respective ends of the first and the second fibres from which part of the coating has been removed.

The device for carrying out a method according to the invention is characterized by an injection light guide (11), arranged as specified in part (a) of claim 1 for injecting the optical signal into the first optical fibre (1) at a straight part thereof said light guide (11) having a diameter which is not larger than that of said first optical fibre (1), and further having an optical refractive index which is equal to or lower than that of the coating (2) of said first optical fibre (1); by a mirror means for extending along said straight part, positioned on the opposite side of the first optical fibre to the injection light guide and by holding means for holding said first and second optical fibres (1; 6, 7) with their respective free ends (4; 5) adjacent and in opposition to each other, and for maintaining a section adjoining the straight part of each of said first and second optical fibres (1; 6, 7) in the form of a bend having such a radius of curvature that the angle between the incoming and outgoing axes of said bend is at least 45° and at most 180° with a radius of curvature of at least 3 mm and at most 10 mm; by an extraction light guide (20) of a refractive index higher than that of the fibres coating arranged for extracting light from the second optical fibre (7); and by means for aligning the opposed fibre ends (4, 5) in accordance with the intensity of the signal coupled out of the core of the second optical fibre (7) via the extraction light guide (20). By making use of the invention a very good alignment of monomode fibres has been made possible in a surprising way allowing the injection of an optical signal into the core as well as the detection of that signal at a short distance from the splice area, which contributes considerably to the practical uses of monomode fibres, particularly with regard to splicing in a pit.

C. Short description of the drawing

The invention will now be further elucidated with the help of the drawing.

Fig. 1 shows a preferred embodiment of a device according to the invention.

Fig. 2 represents a cross-section of a signal injecting or extracting area.

Fig. 3 shows a view of a further embodiment of two fibre ends to be coupled.

Fig. 4 represents a diagram showing the connection between the amount of light and the offset of the core axes.

D. Description of the embodiments

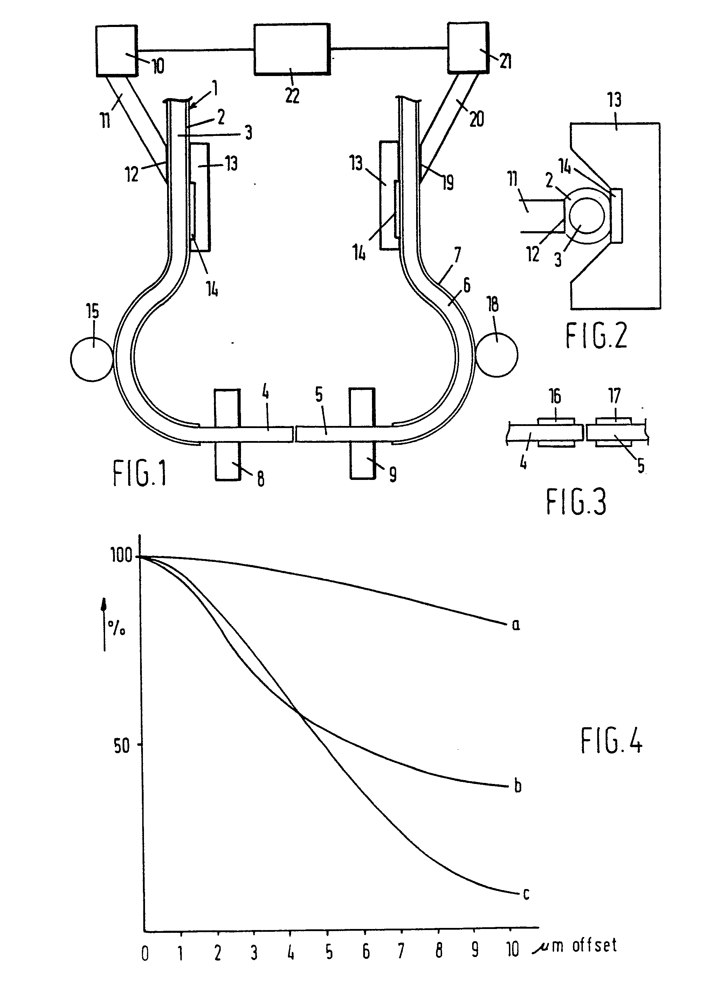

Fig. 1 shows a preferred embodiment of the device according to the invention comprising a first fibre 1 with a coating 2 and a cladding 3 enclosing a core which is not shown. The end of the fibre 1, which has to be coupled and the coating of which has been removed at that location over a distance of preferably 20 mm, is designated by 4. In case the refractive index of the coating is higher than that of the cladding, the removal of the coating can be limited to the one or two millimetres that have to be made free for splicing. An end 5 of a second fibre with a cladding 6 can also be made free from a coating 7 over a distance of 20 mm. The fibre end 4 is pinched in a fixed block 8, the fibre end 5 is pinched in an adjustable block 9. By means of the adjustable block 9 the fibre end can be moved over some micrometres in a plane perpendicular to the axis of the fibre.

A preferably modulated signal is injected, via a light guide 11, into the coating 2 by means of a strong source of light 10, like a laser. The light guide 11 has preferably a hard ground end face 12, the refractive index of which is equal to or lower than that of the coating 2. The light guide 11 is preferably made of quartz.

Fig. 2 shows a cross-section of the coupling area. A pressure block 13, partly provided with a mirror 14, is mounted opposite to the surface 12. The mirror 14 prevents a large part of the injected light emerging from the fibre on the other side. Since if the coating has a higher refractive index than the cladding, the optical signal injected will be inclined to orientate itself in a direction more perpendicular to the axis of the fibre in the cladding, which is, however, in contradistinction with the requirement that the signal has to remain in the cladding. Dependent on the refractive index of the cladding, an optical signal which makes too small an angle with the normal cannot remain within the cladding. A similar problem arises when converting the cladding modes into modes which are propagated by the core. The refractive index of the core (about 1.464) is a little higher than that of the cladding (about 1.460), so that the cladding modes will enter the core at a smaller angle with the normal. According to the invention, the fibre is formed into a bend of at least 45° and at most 180°, but preferably 90° over a radius of curvature of at least 3 mm and at most 10 mm, but preferably 5 mm. The bending being effected by a pin 15, which is preferably provided with a reflective surface. Such a pin is preferably chromium-plated. In a fibre thus bent the greater part of the cladding modes are converted into modes which are propagated by the core, provided the bend is located at a distance of not more than 10 mm after the coupling area. For further attenuation of the remaining cladding signals, the fibre ends 4 and 5 can be provided, just before the splice, with two cylindrical layers 16 and 17 of a material with a higher refractive index than that of the cladding (Fig. 3). The layers 16 and 17 are preferably formed by a suitable glue or by a small sponge with silicone oil. It is also possible to provide the blocks 8 and 9 on their inner sides with a suitable synthetic material with a higher refractive index than that of the cladding. After the measures thus taken the optical signal in the fibre end will be exclusively in the core. By means of the adjustable block 9 the core of the fibre end 5 will now be positioned in such a way that a maximum amount of the light emerging from the core of the fibre end 4 will be coupled into the core of the fibre end 5.

By bending the second fibre by means of a second pin 18 through a bend of at least 60° and at most 180°, but preferably 90° the core light is coupled out via a coupling surface 19 into a light guide 20, which has preferably a somewhat larger diameter than the fibre and a refractive index which is a little higher than that of the coating 7. After this the optical signal is fed to a detector 21. The electric signal fed to the laser 10 will now be compared with the signal from the detector 21 by a comparator 22.

Fig. 4 shows the effect of the measures according to the invention. In the figure the optical signal detected by the detector 21 is plotted in per cents along the vertical axis, whereas the transverse offset of the centre axes of the cores of the fibre ends 4 and 5 are plotted in μm along the horizontal axis. From the diagram it appears that when the measures according to the invention are not utilized, a relatively large offset (1 μm) will only result in a very small signal decrease (curve a). Curve b, being the result of measurements carried out with equal wavelengths, but after the measures according to the invention had been taken, shows that the alignment of the cores can take place much more precisely due to a much larger signal variation with equal offset. The curves a and b have both been measured with a wavelength of 904 nm. The curve c has been measured in a device according to the invention with a 1300 nm wavelength optical signal.

## Claims

1. Method of aligning mutually opposed ends of a first and a second optical fibre comprising injecting an optical signal through the coating into the cladding and the core of the first optical fibre, the optical signal propagating in the second optical fibre being detected through its coating, and the ends of the optical fibres being aligned in such a way that the largest possible part of the optical signal from the end of the first optical fibre will be coupled into the end of the second optical fibre, characterized by

(a) injecting the optical signal into a straight part of the first optical fibre and causing it substantially to propagate only along the cladding by injecting the light at an angle of at least 10° and at most 20° with regard to the longitudinal axis of the straight part, the injection being performed via a guiding medium the refractive index of which is equal to or lower than that of the coating, and by

(b) employing a reflective surface mounted on the coating on a side of the fibre opposite to the injection area, said reflective surface extending parallel to the axis of the said straight part;

(c) converting the cladding modes into core modes so that the injected light is then caused substantially exclusively to propagate only through the core of the end part of the first fibre, the conversion including forming a part of the first optical fibre into a bend of at least 45° and at most 180° with a radius of curvature of at least 3 mm and at most 10 mm the bent part following the straight part by a distance of at most 10 mm from the injection area;

(d) aligning the cores of the first and the second optical fibres by coupling light between the opposed ends, and by

(e) detecting the optical signal coupled out of the core of the second optical fibre via a guiding medium the refractive index of which is higher than that of the coating.

2. Method in accordance with claim 1, characterized by providing cylindrical layers around the optical fibre ends, of a medium with a refractive index which is higher than that of the cladding to further attenuate any remaining cladding modes.

3. Method in accordance with claim 1 or 2 particularly adapted for aligning monomode fibres.

4. A device for carrying out the method as claimed in one or more of the preceding claims, characterized by an injection light guide (11), arranged as specified in part (a) of claim 1 for injecting the optical signal into the first optical fibre (1) at a straight part thereof said light guide (11) having a diameter which is not larger than that of said first optical fibre (1), and further having an optical refractive index which is equal to or lower than that of the coating (2) of said first optical fibre (1); by a mirror means for extending along said straight part, positioned on the opposite side of the first optical fibre to the injection light guide and by holding means for holding said first and second optical fibres (1; 6, 7) with their respective free ends (4; 5) adjacent and in opposition to each other, and for maintaining a section adjoining the straight part of each of said first and second optical fibres (1; 6, 7) in the form of a bend having such a radius of curvature that the angle between the incoming and outgoing axes of said bend is at least 45° and at most 180° with a radius of curvature of at least 3 mm and at most 10 mm; by an extraction light guide (20) of a refractive index higher than that of the fibres coating arranged for extracting light from the second optical fibre (7); and by means for aligning the opposed fibre ends (4, 5) in accordance with the intensity of the signal coupled out of the core of the second optical fibre (7) via the extraction light guide (20).

5. Device in accordance with claim 4, characterized in that the injection light guide (11) has a hardness which differs from that of the coating (2) of the optical fibre (1).

6. Device in accordance with claim 4 or 5, characterized in that the holding means include pins (15, 18) provided with a light reflecting surface.

## Patentansprüche

1. Verfahren zum Ausrichten der zueinander gegenüberliegenden Enden einer ersten und einer zweiten optischen Faser, welches ein Injizieren eines optischen Signals durch den Mantel in die Hülle und den Kern der ersten optischen Faser einschliesst, indem das sich durch die zweite Faser fortpflanzende optische Signal über ihren Mantel detektiert wird, und indem die Enden der optischen Fasern derart ausgerichtet werden, dass ein grösstmöglicher Teil des optischen Signals am Ende der ersten optischen Faser in das Ende der zweiten optischen Faser eingekoppelt wird, dadurch gekennzeichnet, dass

(a) das optische Signal in einen geraden Teil der ersten optischen Faser injiziert wird, indem durch Einspritzen des Lichtes in einem Winkel von mindestens 10° und höchstens 20° in bezug auf die Längsachse des geraden Teils bewirkt wird, dass sich das Licht im wesentlichen nur entlang der Hülle fortpflanzt, und indem das Einspritzen über ein leitendes Medium durchgeführt wird, dessen Brechungsindex gleich oder niedriger ist als derjenige des Mantels, und

(b) eine reflektierenden am Mantel gegenüber der Einspritzfläche angeordneten Fläche verwendet wird, die sich parallel zur Achse des besagten geraden Teils erstreckt;

(c) die Moden der Hülle derart in Moden des Kerns umgewandelt werden, dass bewirkt wird, dass sich das injizierte Licht im wesentlichen ausschliesslich durch den Kern der Endpartie der ersten Faser fortpflanzt, indem die Umwandlung einschliesst, dass ein Teil der ersten optischen Faser als ein Bogen von mindestens 45° und höchstens 180° mit einem Krümmungsradius von mindestens 3 mm und höchstens 10 mm ausgebildet ist, und dass dieser Bogen dem geraden Teil in einem Abstand von höchstens 10 mm von der Einspritzfläche folgt;

(d) die Kerne der ersten und der zweiten optischen Faser durch Einkopplung von Licht zwischen den gegenüberliegenden Enden ausgerichtet werden; und

(e) das vom Kern der zweiten optischen Faser ausgekoppelte optische Signal über ein leitendes Medium detektiert wird, dessen Brechungsindex höher ist als derjenige des Mantels.

2. Verfahren nach Anspruch 1, dadurch gekennzeichnet, dass um die Enden der optischen Fasern zylindrische Unterlagen aus einem Medium mit einem Brechungsindex angeordnet sind, der höher ist als derjenige der Hülle, um zusätzlich etwaige verbleibende Moden in der Hülle abzuschwächen.

3. Verfahren nach Anspruch 1 oder 2 insbesondere angepasst, um Einmodenfasern auszurichten.

4. Vorrichtung zur Durchführung des Verfahrens nach einem oder mehreren der vorangehenden Ansprüche, gekennzeichnet durch einen Einspritzlichtleiter (11) in einer Ausgestaltung, wie sie im Anspruch 1, Abschnitt (a) angegeben ist, um das optische Signal in die erste optische Faser (1) an ihrem geraden Teil zu injizieren, welcher Lichtleiter (11) einen Durchmesser aufweist, der nicht grösser als derjenige der ersten optischen Faser (1) ist, sowie einen Brechungsindex aufweist, der gleich oder niedriger ist als derjenige des Mantels (2) der ersten optischen Faser (1); durch reflektierende Mittel, die entlang des genannten geraden Teils auflegbar und auf der dem Einspritzlichtleiter gegenüberliegenden Seite der ersten optischen Faser angeordnet sind, sowie durch Haltemittel, um diese erste und zweite optische Faser (1; 6, 7) mit je einem ihrer freien Enden (4; 5) an- und gegeneinanderliegend zu halten, und um je einen an einen geraden Teil dieser ersten bzw. zweiten optischen Faser (1; 6, 7) angrenzenden Abschnitt in Form eines Bogens zu halten, der einen solchen Krümmungsradius aufweist, dass der Winkel zwischen den Achsen am Eingang und am Ausgang dieses Bogens mindestens 45° und höchstens 180° mit einem Krümmungsradius von mindestens 3 mm und höchstens 10 mm ist; ferner durch einen Auskopplungslichtleiter (20) mit einem höheren Brechungsindex als dem des Mantels der Fasern, welcher ausgestaltet ist zur Auskopplung von Licht aus der zweiten optischen Faser (7); und durch Mittel zum Ausrichten der gegenüberliegenden Fäserenden (4, 5) nach Massgabe der Intensität des vom Kern der zweiten optischen Faser (7) über den Auskopplungslichtleiter (20) ausgekoppelten Signals.

5. Vorrichtung nach Anspruch 4, dadurch gekennzeichnet, dass der Einspritzlichtleiter (11) eine Härte aufweist, die von der des Mantels (2) der optischen Faser (1) verschieden ist.

6. Vorrichtung nach Anspruch 4 oder 5, dadurch gekennzeichnet, dass die Haltemittel Stifte (15, 18) umfassen, die mit einer lichtreflektierenden Oberfläche versehen sind.

**Revendications**

1. Procédé pour aligner mutuellement les extrémités opposées d'une première et d'une seconde fibre optique, comprenant l'injection d'un signal optique à travers le revêtement dans la gaine et le coeur de la première fibre, la propagation du signal optique dans la seconde fibre et sa détection à travers le revêtement de la seconde fibre, ainsi que l'alignement des extrémités des fibres optiques, de manière que la plus grande partie possible du signal optique sortant de l'extrémité de la première fibre soit injectée dans l'extrémité de la seconde fibre, caractérisée en ce que

(a) on injecte le signal optique dans une partie droite de la première fibre de façon qu'il se propage essentiellement par la gaine, du fait que l'on injecte la lumière sous un angle d'au moins 10° et au plus 20° par rapport à l'axe longitudinal de la partie droite, l'injection s'effectuant via un milieu de guidage dont l'indice de réfraction est égal ou inférieur à celui du revêtement et

(b) en utilisant une surface réfléchissante disposée contre le côté du revêtement opposé à la zone d'injection, la surface réfléchissante s'étendant parallèlement à l'axe de la partie droite;

(c) on convertit les modes de gaine en modes de coeur, de sorte que la lumière injectée est amenée à se propager ensuite à peu près exclusivement par le couer de la partie terminale de la première fibre, la conversion comprenant la déformation d'une partie de la première fibre optique en une courbe d'au moins 45° et au plus 180°, avec un rayon de courbure d'au moins 3 mm et au plus 10 mm, la partie courbe suivant la partie droite à une distance de tout au plus de 10 mm de la zone d'injection; et

(d) on aligne les couers des première et seconde fibres optiques en faisant passer la lumière entre leurs extrémités opposées et

(e) en détectant le signal optique par son extraction du coeur de la seconde fibre optique via un milieu de guidage dont l'indice de réfraction est supérieur à celui du revêtement.

2. Procédé selon la revendication 1, caractérisé en ce que l'on entoure les extrémités des fibres optiques de couches cylindriques d'un milieu ayant un indice de réfraction supérieur à celui de la gaine afin d'affaiblir davantage les modes résiduels éventuels de la gaine.

3. Procédé selon la revendication 1 ou 2, convenant particulièrement à l'alignement de fibres unimodales.

4. Dispositif pour la mise en oeuvre du procédé selon une ou plusieurs des revendications précédentes, caractérisé par un guide de lumière d'injection (11), agencé comme spécifié dans la partie (a) de la revendication 1 pour injecter le signal optique dans une partie droite de la première fibre optique (1), ce guide de lumière (11) ayant un diamètre qui ne dépasse pas celui de la première fibre optique (1) et ayant en outre un indice de réfraction égal ou inférieur à celui du revêtement (2) de la première fibre optique (1); par un moyen réfléchissant destiné à s'étendre le long de la partie droite sur le côté de la première fibre opposé au guide de lumière d'injection, ainsi que par un moyen de maintien pour maintenir les première et seconde fibres optiques (1; 6, 7) à proximité et l'une en face de l'autre par leurs extrémités libres respectives (4; 5) et pour maintenir une section voisine de la partie droite de chacune des fibres (1; 6, 7) sous la forme d'une courbe d'une étendue telle que l'angle entre l'axe d'entrée et l'axe de sortie de la courbe est d'au moins 45° et au plus 180°, le rayon de courbure étant d'au moins 3 mm et au plus 10 mm; par un guide de lumière d'extraction (20) d'indice de réfraction supérieur à celui du revêtement des fibres et agencé pour extraire de lumière de la seconde fibre optique (7); de même que par un moyen pour aligner les extrémités opposées (4, 5) des fibres en fonction de l'intensité du signal extrait du coeur de la seconde fibre (7) via le guide de lumière d'extraction (20).

5. Dispositif selon la revendication 4, caractérisé en ce que le guide de lumière d'injection (11) possède une dureté qui diffère de celle du revêtement (2) de la fibre optique (1).

6. Dispositif selon la revendication 4 ou 5, caractérisé en ce que le moyen de maintien comporte des fiches (15, 18) pourvues d'une surface réfléchissant la lumière.

FIG.1

FIG.2

FIG.3

FIG.4